# EUROPEAN PATENT APPLICATION

(11) **EP 0 953 297 A2**
(43) Date of publication of application: **03.11.1999**
(21) Application number: 99303304.2
(22) Date of filing: 28.04.1999
(51) Int. Cl.: A23N 15/00

(54) **Vegetable trimming apparatus**

(30) Priority: 29.04.1998 GB 9809008; 19.01.1999 GB 9901010
(71) Applicant: Vegwise Limited, Glenrothes, Fife KY7 5PW (GB)
(72) Inventor: Thorgrimsson, Nigel Ragnar, Humbie, East Lothian EH36 5PB (GB)
(74) Representative: Newell, Campbell

(57) **Abstract**

The present invention relates to a vegetable trimming apparatus (1) particularly suitable for trimming calabrese. The apparatus (1) comprises a first one dimensionally curved blade (2) having a generally upwardly facing two dimensional U-shaped cutting edge (4). This cutting edge (4) is fixedly mounted to a base portion (6) of the apparatus (1). A second one dimensionally curved or C-shaped blade (8) having a one dimensionally cutting edge (10) is mounted on spaced apart bushes (12) so as to be rotatable with respect to the first fixed blade (2). The second or moveable cutting blade (8) is connected to a lever (14) having a handle portion (16) for driving the second rotatable blade (8) from the position with the blades (2, 8) being angularly spaced apart for receiving a broccoli item to be trimmed to a second cutting position with the cutting edge (10) of the second blade (8) overlapping the generally upwardly facing cutting edge (4) of the first blade (2). Movement of the second cutting blade (8) between the first open position and the second cutting position defines a generally part spherical cutting envelope through the stalk of the broccoli thereby to cut and separate the stalk from the broccoli head leaving cut broccoli florets. Apparatus for trimming cauliflower is disclosed as is a method and a harvester for use with the trimming apparatus.

## Description

The present invention relates to vegetable trimming apparatus for use in trimming off unwanted parts of vegetables, for example the stalk from a cauliflower or broccoli (calabrese).

Vegetables such as cauliflower and broccoli, once harvested, comprise a head or edible portion and a stalk or generally non-edible portion. In some cases the stalk and head will be supplied as a whole to an end-user such as a customer in a shop but where it is required to freeze the vegetable it is known to separate the stalk from the head so that the vegetable is supplied in a "floretted" condition.

Historically and indeed conventionally the floretting of vegetables such as cauliflower and broccoli would have been done manually in the field where the vegetable grew. At the time when mechanisation and automation of various farming techniques including harvesting was being undertaken the manual floretting of vegetables such as cauliflower and broccoli was considered to be extremely expensive because of the labour intensiveness of the harvesting. Accordingly there was a move to automate broccoli and cauliflower floretting machinery using factory or production line techniques which are typically undertaken away from the field once the vegetable has been harvested.

Such automated systems as will be described further below have variously proved to be extremely expensive to purchase and to operate and have had varying degrees of success in providing floretted vegetable portions for further use/processing such as for example freezing. Furthermore as such systems were generally factory based it will be appreciated that there are considerable costs involved in transporting harvested vegetables from a field to a factory where it is then processed. Moreover once the core had been removed it is necessary to dispose of such waste core which requires further transport. When it is considered that approximately 35% - 50% of the weight of a vegetable such as broccoli or cauliflower is that of the stalk then it will be appreciated that considerable costs are involved in transporting vegetables harvested from a field and then to transport waste material back to the field or to some other disposal site. Furthermore such known systems involve multiple handling stages which gives rise to the potential risk of damage to the harvested vegetable. Additionally it is desirable to reduce as far as possible the time taken between a vegetable such as cauliflower or broccoli being harvested and it being frozen and reducing this time results in fresher food. Furthermore such "automated" systems invariably require further manual processing such as size grading or separation of cut stalks from cut florets, thus negating further the objective of reducing manual effort.

What the applicant of the present invention has realised is that if there is a move away from such expensive automated systems and the additional costs associated therewith to a simpler manual system suitable for use "in the field" then substantial savings can be made and one or more of abovementioned problems obviated.

Various publications disclosing methods and apparatus for the trimming of vegetables, in particular cauliflower and broccoli, have been disclosed in for example US Patent No. 5102678, EP Publication No. 552902, UK Publication No. GB2213045, EP Publication No. 655891, US Patent No. 4241096, EP Publication No. 352077 and UK Patent Publication No. GB2309156. All the aforesaid disclose more or less complex automated apparatus comprising inter alia conveyors with various devices to support a vegetable to be trimmed in such a position that a moveable cutting head, usually comprising a pair of moveable cutting edges, is designed to remove the core such that the vegetable being cut is "floretted". Such a system is described in UK Patent Publication No. GB2309156. Experience by the applicant of a machine according to GB2309156 has shown that such machines have not been able to realise commercially the claims made about such designs. One particular disadvantage of the system disclosed in GB2309156 is that the pair of curved cutting blades having co-operable cutting edges and being mounted one within the other so as to be rotatable about a common axis generally requires complex three dimensional shapes such as a blade having a segment of a spherical surface or an elliptical shape. To manufacture such blades it is generally necessary to machine them from a solid block of steel or for them to be accurately stamped so that the closely fitting interrelation between the overlapping blades required for precise cutting of broccoli and cauliflower can be achieved. The very complex geometrical arrangement of blades means that they tend to be very expensive to replace, particularly when damaged, which is not unusual in such automated systems. Furthermore the arrangement and actuation of such blades does not lend themselves to manual use in an "in-field" situation.

It is an object of the present invention to avoid and minimise one or more of the foregoing disadvantages.

The present invention provides a calabrese trimming apparatus for the removal of the stalk and/or core from a calabrese item, the apparatus comprising a first substantially one dimensionally curved blade having a substantially one dimensionally curved cutting edge, and a second substantially one dimensionally curved blade having a substantially two dimensionally curved cutting edge, one of said curved blades being fixedly mounted to a base portion of the apparatus and the other one of said cutting blades being rotatable about an axis so as to define a generally part spherical cutting envelope between a first position with the edges of said blades substantially angularly spaced apart for receiving a calabrese item to be trimmed or cored and a second cutting position with the two dimensionally curved cutting edge of the first blade overlapping the one dimensionally curved cutting edge of the first blade; the other or rotatable blade being provided with lever means having at an end remote from the blade end thereof a user engagable handle portion, said lever means being formed and arranged for driving said other or rotatable blade with respect to said fixed blade from said first position to said second position whereby in use the stalk and/or core of the calabrese item to be trimmed or cored is placed on said fixed blade with said other or rotatable blade angularly spaced apart therefrom and said other or rotatable blade moved with respect to said fixed blade, so as to define said generally part spherical cutting envelope through said stalk and/or core and thereby to cut and separate said stalk and/or core from said calabrese item.

Preferably said one dimensionally curved blade having a substantially two dimensionally curved cutting edge is formed obliquely, for example along a plane which cuts the blade at an angle so that when looking at the blade from above the cutting edge appears to slope downwardly and outwardly from said axis and from a front view with said axis being generally horizontal the cutting blade has a 'U'-shaped appearance. This blade may be considered to be the outer blade as it generally overlaps the one dimensionally curved blade with the one dimensionally curved edge which can be considered to be the inner blade.

Preferably for use in trimming broccoli of the calabrese family said two dimensionally curved edge is on the fixed blade and said blade is constituted by a substantially semi-circular in cross section or C-shaped cutting blade when viewed in a plane view.

Preferably for use in trimming or coring a cauliflower of the calabrese family said one dimensional cutting edge is on the fixed blade and said two dimensional blade is rotatable and the said one dimensional or fixed blade is constituted by a substantially circular in cross section cutting blade when viewed in plan view. Preferably said circular shaped cutting blade edge is generally upwardly facing as is said rotatable blade cutting edge when said blades are in an open receiving condition.

In another respect the present invention provides a vegetable trimming apparatus for the removal of the stalk and/or core from a vegetable item, the apparatus comprising a first substantially one dimensionally curved blade having a generally upwardly facing vegetable item engagement edge, said edge being fixedly mounted to a base portion of the apparatus and a second substantially one dimensionally curved blade having a substantially one dimensionally curved cutting edge rotatable about an axis so as to define a generally part spherical cutting envelope and with respect to said vegetable item engagement edge between a first position with the edges of said blades substantially angularly spaced apart for receiving a vegetable item to be trimmed and a second cutting position with said cutting edge of said second blade overlapping the generally upward facing edge of the first blade, said second rotatable blade being provided with a lever means having at an end remote from the blade end thereof a user engagable handle portion, said lever means being formed and arranged for driving said second rotatable blade from said first position to said second position whereby in use the stalk and/or core of the vegetable item to be trimmed is placed between said first and second blades in said angularly spaced apart position and said second blade moved with respect to said first fixed blade, the path of travel of said cutting edge of said second blade defining said generally part spherical cutting envelope through said stalk and/or core and thereby to cut and separate said stalk and/or core from said vegetable item.

Thus with either the vegetable trimming apparatus or calabrese trimming apparatus according to the present invention it is possible to offer trimmed vegetable portions or florets with a high degree of cutting control, and ensuring that the resulting product conforms closely with the desired specification and with the minimum of waste in a simple and convenient manner.

With particular reference to said vegetable trimming apparatus preferably said first cutting blade generally upwardly facing vegetable item engagement edge is a cutting edge having a substantially two dimensionally curved cutting edge formed and arranged for cutting co-operation with said second substantially one dimensionally curved cutting edge. Where said first fixed one dimensionally curved blade is a two dimensionally curved cutting edge or vegetable item engagement edge said edge is formed obliquely, for example along a plane which cuts the first blade at an angle so that when looking at the blade in a side view the cutting edge appears to slope downwardly and outwardly from said axis and from a front view, said axis being generally horizontal, the cutting blade has a U-shaped appearance.

Alternatively and where said first and second blades have substantially one dimensionally curved cutting edges, each blade is constituted by a substantially semi-circular in cross section or C-shaped cutting blade which when viewed in a plan view with said first and second blades in said first position with the blade substantially angularly spaced apart, the first and second cutting edges present themselves as an upwardly facing generally circular cutting edge and with said first and second cutting edges in said second cutting position with said cutting edge of said second blade overlapping substantially the generally upwardly facing cutting edge of the first blade, said blades have, when viewed from above, the appearance of two C-shaped blades one blade surrounding closely the second blade such that said second blade in said second cutting position has a generally downwardly facing edge or cutting edge.

Preferably said second curved blade is rotatable with respect to said first blade in the range of from 60° to 200°, desirably 90° to 180° between said first and second positions.

Preferably said first and second blades are arranged with the base portion of the apparatus so that with said first and second blades in said first angularly spaced apart position the base support portion of the apparatus defines an aperture such that at the completion of the cutting the core or stalk cut by the second cutting curved blade may be removed, preferably falling away under gravity, and such that the aperture is closed by the second curved blade to prevent the edible portions, once cut, from dropping through said aperture. Advantageously there may be provided a shield on said movable blade to prevent edible portions from falling in with the waste portions. Desirably there is provided means for directing said trimmed edible portions into a container and there being other means such as for example a channel or chute for directing cut stalks and/or cores into a disposal container, onto a conveyor or directly back into the field from which they have just been harvested thereby avoiding transportation costs of waste.

Whilst the prior art and in particular UK Patent Publication No. GB2309156 teaches of a vegetable trimming apparatus suitable for use in trimming the stalk from cauliflower and broccoli it has been found that due to the different growing characteristics and shape of cauliflower and broccoli that principles and apparatus that may be suitable for removing the core from a cauliflower need not necessarily be suitable for use in removing the core from a broccoli and vice versa.

Accordingly, it is a further object of the present invention to provide a vegetable trimming apparatus for use in the removal of the stalk from a broccoli and a vegetable trimming apparatus for use in the removal of the stalk and/or core from a cauliflower both of which apparatus are linked by a single inventive concept.

Thus according to a further aspect of the present invention there is provided a broccoli trimming apparatus for the removal of the stalk and/or core from a broccoli head, the apparatus comprising a first substantially one dimensionally curved blade having a generally upwardly facing broccoli item engagement edge, said edge being fixedly mounted to a base portion of the apparatus and a second substantially one dimensionally curved blade having a substantially one dimensionally curved cutting edge rotatable about an axis so as to define a generally part spherical cutting envelope and with respect to said edge between a first position with the edge of said blade substantially angularly spaced apart for receiving the stalk of broccoli to be trimmed and a second cutting position with said cutting edge of said second blade overlapping the generally upwardly facing edge of the first blade, the broccoli item engagement edge of said first curved blade having a substantially two dimensionally curved edge, preferably a cutting edge, and said second rotatable blade being provided with a lever means having at an end remote from the blade end of a user engagable handle portion, said lever means being formed and arranged for driving said second rotatable blade from said first position to said second position whereby in use the stalk of a broccoli head to be trimmed is placed between said first and second blades in said angularly spaced apart position and said second blade moved with respect to said first blade, the path of said cutting edge of said second blade defining said generally part spherical cutting envelope through said stalk thereby to cut and separate broccoli florets from said stalk of a broccoli head.

Preferably said second curved blade is rotatable with respect to said first blade in the range of from 80° to 130°, desirably 90° to 130°, for example 110°.

Preferably and as with the calabrese and vegetable trimming apparatus according to the other aspects of the present invention said broccoli trimming apparatus is formed and arranged for use above means, such as for example chutes or channels for directing cut broccoli florets into a collection container and a second chute or channel for directing cut stalks into a waste collection container or directly into the field from which it has been harvested.

As it will be appreciated that there are different varieties of broccoli and also different sizes of broccoli head the size of the first and second cutting curved blades may be changed according to requirements. As an example though the diameter of the second curved blade being generally semi-circular is in the range of from 80mm to 180mm, desirably 100mm to 140mm, for example 90mm or 120mm according to the size of broccoli head to be trimmed.

Whilst broccoli has a more or less flat head, cauliflower on the other hand has a much rounder head and the penetration of curved blades required into the core of a cauliflower is much greater than for example with broccoli.

Thus in a further respect the present invention provides a cauliflower coring apparatus for the removal of the core from a cauliflower head, the apparatus comprising a first substantially one dimensionally curved blade having a generally upwardly facing cauliflower engagement edge, preferably a one dimensionally curved cutting edge, said edge being fixedly mounted to a base portion of the apparatus and a second substantially one dimensionally curved blade having a substantially one dimensionally curved cutting edge rotatable about an axis so as to define a generally hemispherical cutting envelope and with respect to said engagement edge between a first position with the cutting blades substantially angularly spaced apart for receiving the core of cauliflower to be trimmed and a second cutting position with said cutting edge of said second blade overlapping the generally upwardly facing edge of the first blade, said second rotatable blade being provided with a lever means having at an end remote from the blade end thereof a user engagable handle portion, said lever means being formed and arranged for driving said second rotatable curved blade from said first position to said second position substantially adjacent said first curved blade with said cutting edge thereof having a generally downwardly facing orientation, whereby in use, the core of the cauliflower item to be trimmed is placed upon said first and second curved blades in said angularly spaced apart position and said cauliflower pressed down on said cutting blades so that said blades penetrate into the core of the cauliflower to be trimmed and said second blade moved with respect to said first fixed blade, the path of travel of said cutting edge of said second blade defining said generally hemispherical cutting envelope through said core and thereby to separate cauliflower florets from the core of a cauliflower being trimmed.

Preferably said base portion of said cauliflower coring apparatus has a frusto-conical shaped base formed and arranged to split out from a cauliflower head cauliflower florets which have been cut by the cutting edges.

Preferably said lever means is formed and arranged to sit flush with the side of said frusto-conical base support portion with said first and second curved blades in said substantially angularly spaced apart orientation facing generally upwardly, whereby when said lever is driven outwardly from said frusto-conical base support portion the lever acts upon the cauliflower heads so as to break up the head into cut floretted cauliflower portions.

In yet another respect the present invention provides a mobile harvester, preferably a self propelled mobile harvester, including one of a calabrese trimming apparatus, a vegetable trimming apparatus, a cauliflower coring apparatus, or a broccoli trimming apparatus according to the present invention, said mobile harvester being provided with a first chute means for directing trimmed edible vegetable through a grading grid and a second chute means for directing cores and/or stalks into a waste container or onto a conveyor or directly back into the field from which the vegetable item was harvested. Said mobile harvester is preferably in the form of a trailer formed and arranged for connection to for example draw bar assembly or the three-point linkage of a tractor, provided with a user/operator position. Alternatively said mobile harvester is formed and arranged to be mounted to and by a tractor or the like by a three-point linkage.

Preferably said mobile harvester is provided with receptable means for receiving directly from a field, cut calabrese and for storing same prior to a user/operator in use of a said one of said trimming apparatus trimming said calabrese in said apparatus. Preferably said mobile harvester is provided with a stand portion for accommodating a said user/operator in use of the apparatus. Preferably there are provided under said trimming apparatus container means, preferably replaceable container means formed and arranged for receiving trimmed calabrese. Preferably said trimming apparatus is mounted centrally on said harvester with two said container means placed one on each side of said harvester. Desirably said trimming apparatus is reversible so that when one container means is full of trimmed calabrese it may be turned round and the second container means filled. Alternatively there may be provided a plurality of trimming apparatus on said harvester for example three and a corresponding number incremented by one of containers. Thus in the example of the three trimming apparatus, four containers would be provided, each one of said apparatus serving two containers. Advantageously there may be provided an inspector/quality controller position on said harvester to ensure the operator/ user is trimming calabrese to the required standard.

Instead of there being provided containers, there may be provided a conveyor belt onto which trimmed calabrese fall, which calabrese may then be conveyed to a remote tractor and collector/trailer and boxes.

The invention includes, in a further respect, a method for the removal of the stalk and/or core from a vegetable item, the method comprising the steps of providing a calabrese trimming apparatus or vegetable trimming apparatus or broccoli trimming apparatus or cauliflower coring apparatus according to the present invention, placing the stalk and/or core of the vegetable item to be trimmed between the first and second curved blades of said apparatus; driving said second rotatable curved blade from said first position to said second position, the path of travel of said cutting edge of said second blade defining a generally part spherical cutting envelope through said stalk and/or core, whereby the stalk and/or core is cut and separated from the edible portions of the vegetable item.

Preferably said method for coring of a cauliflower includes the step, prior to driving said second rotatable blade from said first position to said second position of applying downward pressure on the cauliflower against the generally upwardly facing curved blades so that said blades penetrate into the body of the cauliflower around the core thereof so as to separate florets of cauliflower growing outwardly from the stem of the core of the cauliflower.

Preferably said method of coring a cauliflower includes a further step of inducing a twisting action to the cauliflower in addition to applying downward pressure so as to facilitate cutting of said florets which grow outwardly of the stem of the core of a cauliflower.

Preferably the apparatus according to the invention is provided with a safety catch means formed and arranged so that said second or moveable blade cannot be operated without the safety catch means being operated by an operator in use of the apparatus. Most preferably said safety catch means is provided with a lever means to operate it so that in use a user requires one hand to release the safety catch and hold it in a released position and the user's other hand is used to drive the lever means of the apparatus thereby to prevent an operator's fingers accidentally coming into contact with the cutting edges in use of the apparatus. Preferably said safety catch means is provided with biasing means to bias the catch means into position.

Further preferred features and advantages of the present invention will appear from the following detailed description given by way of example of some preferred embodiments illustrated with reference to the accompanying drawings in which:-
Fig.1 is a side view of a first embodiment of vegetable trimming apparatus according to the invention;
Fig.2 is a side view of the apparatus shown in Fig.1;
Fig.3 is a perspective view of the apparatus shown in Fig.1;
Fig.4 is a side view of a second embodiment of vegetable trimming apparatus according to the invention;
Fig.5 is a plan view of the vegetable trimming apparatus shown in Fig.4;
Fig.6 shows a chute arrangement suitable for use with the vegetable trimming apparatus shown in Figs.1 and 4.;
Fig.7A and 7B show schematically the arrangement of the cutting edges for use in the apparatus shown in Figs.1 and 4;
Fig.8 is a side view of a further embodiment of vegetable trimming apparatus according to the invention;
Fig.8a is a plan view of the embodiment shown in Fig.8;
Fig.9 shows a chute arrangement suitable for use with the embodiment shown in Fig.8; and
Fig.10 is view of a harvester apparatus in use of the vegetable trimming apparatus shown in Figs. 8 and 9.

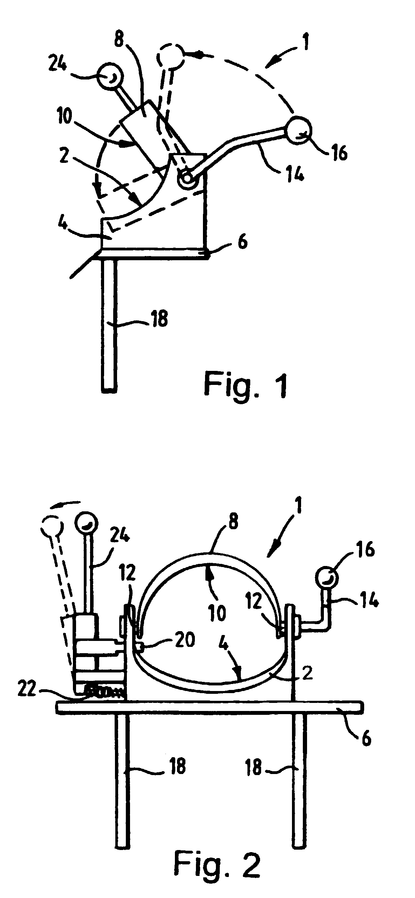

A vegetable trimming apparatus, generally indicated by reference number 1, is shown in Figs.1, 2 and 3. The apparatus is designed for the removal of the stalk and/or core of a vegetable item, particularly a broccoli head. The apparatus 1 comprises a first one dimensionally curved blade 2 having a generally upwardly facing two dimensional U-shaped cutting edge 4. This cutting edge 4 is fixedly mounted to a base portion 6 of the apparatus 1. A second one dimensionally curved or C-shaped blade 8 having a one dimensionally curved cutting edge 10 is mounted on spaced apart bushes 12 so as to be rotatable with respect to the first fixed blade 2. The second or moveable cutting blade 8 is connected to a lever 14 having a handle portion 16 for driving the second rotatable blade 8 from the first position (as shown in Figs.1 to 3) with the blades 2,8 being angularly spaced apart for receiving a vegetable item to be trimmed to a second cutting position with the cutting edge 10 of the second blade 8 overlapping the generally upwardly facing cutting edge 4 of the first blade 2. (shown in dotted outline in Fig.1). Movement of the second cutting blade 8 between the first open position and the second cutting position defines a generally part spherical cutting envelope through the stalk of the broccoli thereby to cut and separate the stalk from the broccoli head leaving cut broccoli florets (not shown).

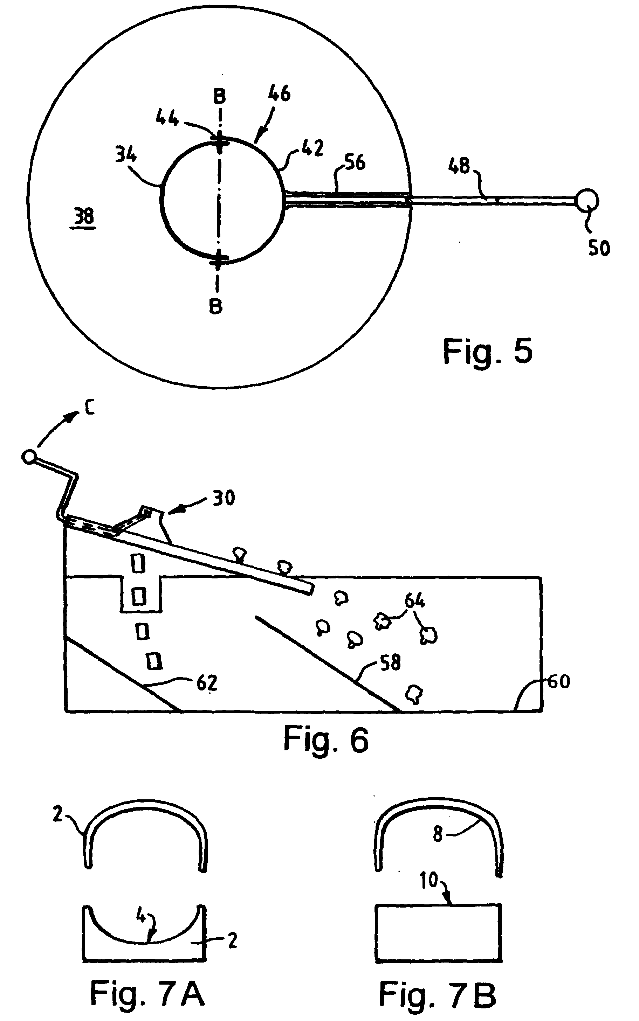

The apparatus 1 is provided with two elongate support members 18 for supporting the apparatus over a chute arrangement mounted on a mobile harvester (not shown). The chute arrangement (shown in Fig.6 in use with a second embodiment of the invention) is arranged with the trimming apparatus such that once the cutting blades 28 have removed the stalk from the broccoli florets the stalk falls away, under gravity, from directly under the apparatus on to a chute which then directs the inedible stalk portion back into the field where the broccoli has been harvested or alternatively into a container for subsequent disposal. The cut broccoli florets fall, again under gravity, from the front of the cutting blades, and are not able to fall down the same chute as the stalks because of the position of the first and second blades, and slide down another chute through a grader grid (not shown) and into a storage container. The grader grid is arranged with apertures so that only broccoli florets having a size less than the aperture can pass therethrough. Cut broccoli florets which are larger than the apertures in the grading grid can be readily pulled out by an operator and cut manually using a knife.

By undertaking all the operations of harvesting of the broccoli heads, de-stalking of the broccoli into broccoli florets; grading of broccoli florets and then storing into storage containers in a single operation in the field significant financial and commercial advantages can be recognized.

In more detail and as shown in Fig.2 the second cutting blade 8 is prevented from coming into cutting co-operation with the first cutting blade by an end stop 20. This end stop 20 must be removed to allow the second blade 8 to come into cutting co-operation with the first blade 2 and thereby to cut broccoli. The end stop 20 is mounted on a spring 22 loaded lever 24 so that the end stop 20 always remains in position unless the lever is manually operated. It will be appreciated therefore that if the blade is to be operated then one hand of a user is required to do this and the user's other hand is required to operate the release of the end stop and by utilising both hands of the operator there is no risk whatsoever of an operator's fingers or hand being accidentally placed between the cutting blades and the blade being operated.

As shown in Fig.7B the second moveable blade 8 has a generally U-shaped blade with a substantially one dimensional cutting edge 10. The first cutting blade 2 is also U-shaped but the cutting edge 4 is two dimensional and has a U-shaped appearance when viewed from the front and in plan view. (As shown in Fig.7A).

As shown in Fig.7B the shape of both of the blades for use with the cauliflower coring apparatus according to the second embodiment of the invention are the same shape as the moveable blade of the first embodiment and comprises two curved or C-shaped blades each having a flat or one dimensional cutting edge. The moveable cutting edge is mounted with respect to the fixed cutting edge about an axis (axis B-B in Fig.5), which axis corresponds with a notional axis of the first fixed blade.

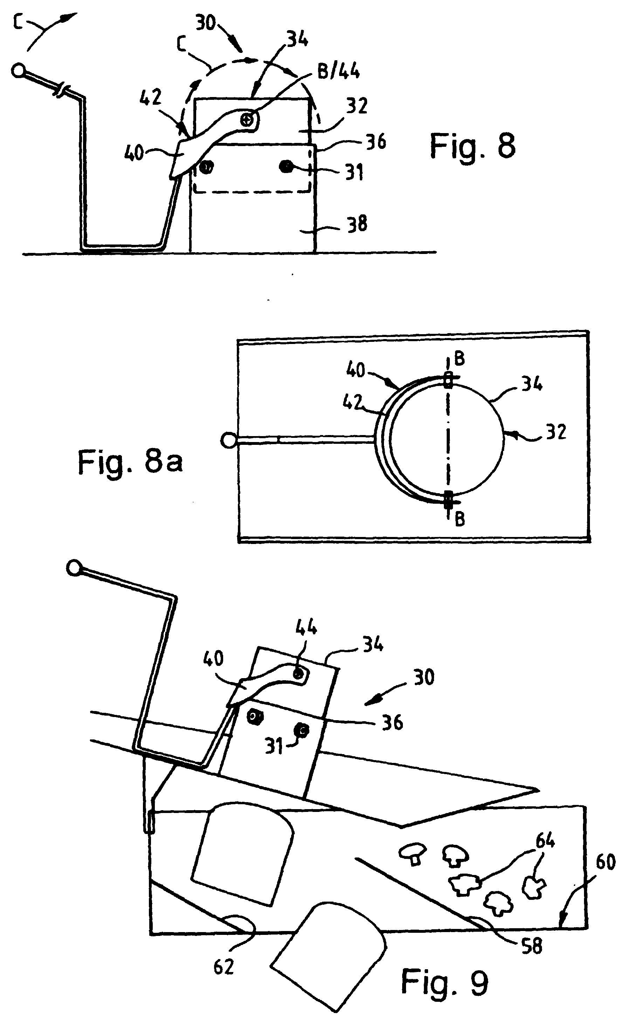

Figs.8, 8a and 9 show a further embodiment of vegetable trimming apparatus particularly suitable for de-coring of cauliflower.

The cauliflower coring apparatus, generally indicated by reference number 30 comprises a first one dimensionally curved circular blade 32 having a generally upwardly facing one dimensional circular cutting edge 34. The cutting edge 34 is supported via bolts 31 to the upper portion 36 of a tubular base support portion 38 of the apparatus 30. A second one dimensionally curved or 'C' shaped blade 40 having a two dimensionally curved cutting edge 42, which cutting edge is generally upwardly facing, is mounted on bushes 44 so as to be rotatable about an axis (indicated by axis B-B in Fig.8a). The second curved blade 40 is arranged with the first curved blade 30 so that when looking at the apparatus in plan view the first cutting edge 34 defines a generally circular upwardly facing cutting edge 46 with the second blade closely surrounding half of the circular blade 32. The second cutting blade 40 is connected to an elongate lever 48 provided with a user engagable handle portion 50 at its distal end 52. The lever 48 is mounted to a central portion 54 of the rotatable cutting blade 40 and depends downwardly therefrom in close proximity with the base support portion 38 and then extends generally vertically upwardly to the user engagable handle portion 50. This lever is designed to drive the second rotatable blade 40 from a first position with respect to the first or fixed cutting blade 30 through 180° (as shown in the direction of arrow C) with the second cutting blade cutting edge 42 now having a generally downward facing orientation. The path of travel of the moveable cutting blade 40 between the generally upwardly facing position and the generally downwardly facing position defines a hemispherical cutting envelope through the core of a cauliflower in use of the cauliflower coring apparatus.

Fig.8a shows a plan view of the cutting blades - the first one dimesionally curved circular blade 32 having the circular cutting edge 34 and the second 'C'-shaped blade 40 having the two dimensionally curved cutting edge 42.

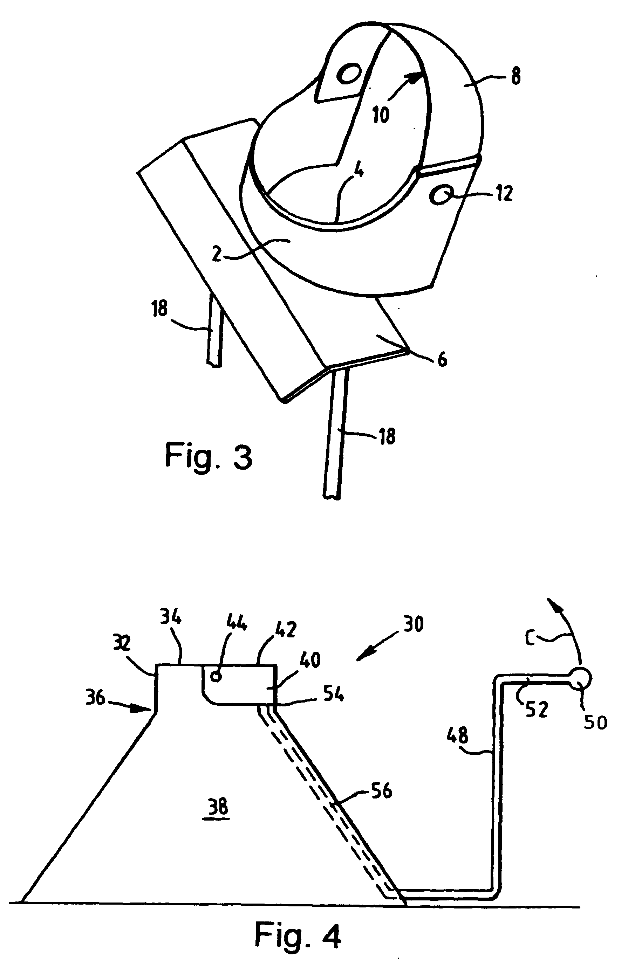

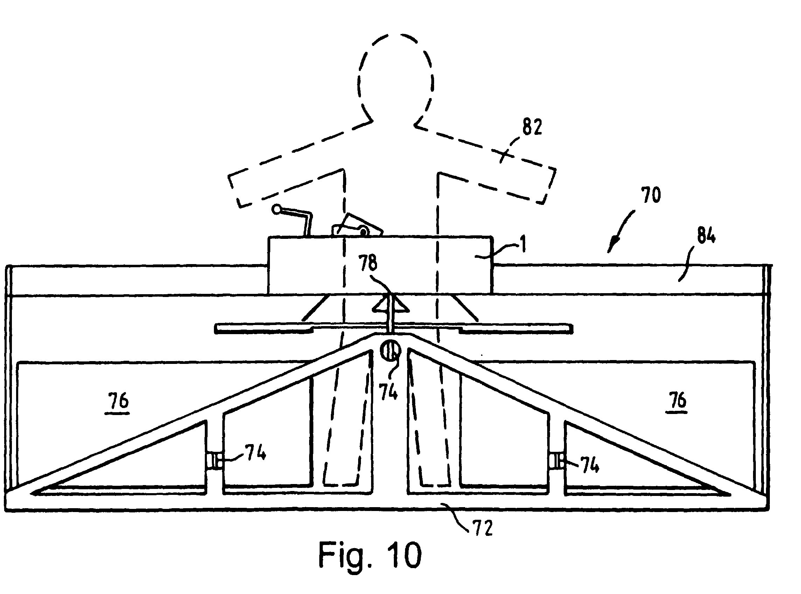

In use, an operator provided with a harvested cauliflower would position the cauliflower, head up, so that the core of the cauliflower is above the first 30 and second cutting blades 40. The operator then pushes down on the cauliflower so that the first circular cutting edge cuts into the core at the base of the cauliflower so as to cut the florets which are growing from the bottom portion of the cauliflower. Cut florets then fall away from the main body of the cauliflower as it is pressed downwardly on the cutting edge. Once the bottom florets have been removed, a safety lock (not shown) is released and the lever pulled upwardly in an arcuate pathway so as to bring the second moveable cutting blade 40 around the inside of the cauliflower into proximity with the first fixed cutting blade 30. The path of travel of the second cutting edge defines the hemispherical cutting envelope mentioned above. As with the embodiment described with reference to Figs.4 to 6 the action of the lever 48 adjacent the second cutting blade acts directly on the upper florets of the cauliflower head and causes them to break apart from adjacent floret portions. The cut floret portions 64 then fall down a chute 58 portion through a grating grid 60 into a collection container (see fig.10). The cored portion remains in the centre of the circular blades and when a further cauliflower head is placed on the apparatus and pushed down onto the cutting blades, this motion forces the core of the previously cored cauliflower to fall away through the centre of the support portion 38 onto a second chute portion 62 immediately under the apparatus which directs the waste core portion out of a trailer onto a field. The inside diameter of the circular cutting blade is very slightly less than the inside diameter of the base support portion and has a downward extent of approximately 6cm. This feature allows the cut core portion which has a diameter less than the internal diameter of the support portion to fall away readily when a further cauliflower is placed onto the apparatus. The circular blade is has a cutting edge at each end and may therefore be turned around when the cutting edge has lost its sharpness

Fig.10 shows a harvester apparatus suitable for use with the vegetable trimming apparatus shown in any of Figs.1 to 3, Figs.4 to 6 and Figs.8 and 9.

The harvester apparatus, generally indicated by reference number 70 comprises a frame assembly 72 mount via three linkage points 74 to the three point linkage of a tractor (not shown). The frame assembly supports two spaced apart containers 76 for receiving floretted calabrese portions cut by a vegetable trimming apparatus 1 according to the invention.

The vegetable trimming apparatus 1 is mounted 78 centrally between the containers on a central portion 80 of the frame assembly so that an operator 82 (shown in dotted line) may operate the apparatus as described above. A vegetable receiving tray 84 is provided which runs across the width of the harvester apparatus 70. Field operatives cutting calabrese in the field then place the cut calabrese onto this tray 84 so that the operator can floret the calabrese.

The trimming apparatus 1 is designed to be reversible so that once one container is full of floretted calabrese the trimming apparatus may be turned round through 180° so that the second container may be filled.

Various modifications may be made to the above described embodiments without departing from the scope of the present invention. Thus for example the cutting edges of the blades may be profiled so as to give a decorative cut e.g. crinkle cut.

## Claims

1. A calabrese trimming apparatus for the removal of the stalk and/or core from a calabrese item, the apparatus comprising a first substantially one dimensionally curved blade having a substantially one dimensionally curved cutting edge, and a second substantially one dimensionally curved blade having a substantially two dimensionally curved cutting edge, one of said curved blades being fixedly mounted to a base portion of the apparatus and the other one of said cutting blades being rotatable about an axis so as to define a generally part spherical cutting envelope between a first position with the edges of said blades substantially angularly spaced apart for receiving a calabrese item to be trimmed or cored and a second cutting position with the two dimensionally curved cutting edge of the first blade overlapping the one dimensionally curved cutting edge of the first blade; the other or rotatable blade being provided with lever means having at an end remote from the blade end thereof a user engagable handle portion, said lever means being formed and arranged for driving said other or rotatable blade with respect to said fixed blade from said first position to said second position whereby in use the stalk and/or core of the calabrese item to be trimmed or cored is placed on said fixed blade with said other or rotatable blade angularly spaced apart therefrom and said other or rotatable blade moved with respect to said fixed blade, so as to define said generally part spherical cutting envelope through said stalk and/or core and thereby to cut and separate said stalk and/or core from said calabrese item.

2. A calabrese trimming apparatus as claimed in claim 1 for use in trimming broccoli wherein said two dimensionally curved edge is on the fixed blade and said blade is constituted by a substantially semi-circular in cross-section or C-shaped cutting blade.

3. A calabrese trimming apparatus as claimed in claim 1 for use in trimming cauliflower wherein said one dimensional cutting edge is on said fixed blade and said two dimensional blade is rotatable and said one dimensional blade is constituted by a substantially circular in cross-section cutting edge.

4. A calabrese trimming apparatus as claimed in claim 3 wherein said circular shaped cutting edge is generally upwardly facing as is said rotatable blade cutting edge when said blades are in an open receiving condition.

5. A vegetable trimming apparatus for the removal of the stalk and/or core from a vegetable item, the apparatus comprising a first substantially one dimensionally curved blade having a generally upwardly facing vegetable item engagement edge, said edge being fixedly mounted to a base portion of the apparatus and a second substantially one dimensionally curved blade having a substantially one dimensionally curved cutting edge rotatable about an axis so as to define a generally part spherical cutting envelope and with respect to said vegetable item engagement edge between a first position with the edges of said blades substantially angularly spaced apart for receiving a vegetable item to be trimmed and a second cutting position with said cutting edge of said second blade overlapping the generally upward facing edge of the first blade, said second rotatable blade being provided with a lever means having at an end remote from the blade end thereof a user engagable handle portion, said lever means being formed and arranged for driving said second rotatable blade from said first position to said second position whereby in use the stalk and/or core of the vegetable item to be trimmed is placed between said first and second blades in said angularly spaced apart position and said second blade moved with respect to said first fixed blade, the path of travel of said cutting edge of said second blade defining said generally part spherical cutting envelope through said stalk and/or core and thereby to cut and separate said stalk and/or core from said vegetable item.

6. A vegetable trimming apparatus as claimed in claim 5 wherein said first cutting blade generally upwardly facing vegetable item engagement edge is a cutting edge having a substantially two dimensionally curved cutting edge formed and arranged for cutting cooperation with said second substantially one dimensionally curved cutting edge.

7. A vegetable trimming apparatus as claimed in claim 5 or claim 6 wherein said second curved blade is rotatable with respect to said first blade in the range of from 60° to 200°.

8. A vegetable trimming apparatus as claimed in any one of claims 5 to 7 wherein said first and second blades are arranged with the base portion of the apparatus so that with said first and second blades in said angularly spaced apart position the base support portion defines an aperture through which the core or stalk may fall away and such that said aperture is closed by the second curved blade when in said second cutting position.

9. A vegetable trimming apparatus as claimed in any one of claims 5 to 8 wherein there are provided means for directing trimmed vegetable portions into a collection container and means for directing cut stalks and/or cores into a disposal area.

10. A broccoli trimming apparatus for the removal of the stalk and/or core from a broccoli head, the apparatus comprising a first substantially one dimensionally curved blade having a generally upwardly facing broccoli item engagement edge, said edge being fixedly mounted to a base portion of the apparatus and a second substantially one dimensionally curved blade having a substantially one dimensionally curved cutting edge rotatable about an axis so as to define a generally part spherical cutting envelope and with respect to said edge between a first position with the edge of said blade substantially angularly spaced apart for receiving the stalk of broccoli to be trimmed and a second cutting position with said cutting edge of said second blade overlapping the generally upwardly facing edge of the first blade, the broccoli item engagement edge of said first curved blade having a substantially two dimensionally curved cutting edge, and said second rotatable blade being provided with a lever means having at an end remote from the blade end of a user engagable handle portion, said lever means being formed and arranged for driving said second rotatable blade from said first position to said second position whereby in use the stalk of a broccoli head to be trimmed is placed between said first and second blades in said angularly spaced apart position and said second blade moved with respect to said first blade, the path of said cutting edge of said second blade defining said generally part spherical cutting envelope through said stalk thereby to cut and separate broccoli florets from said stalk of a broccoli head.

11. A broccoli trimming apparatus as claimed in claim 10 wherein said second curved blade is rotatable with respect to said first blade in the range of from 80° to 130°.

12. A broccoli trimming apparatus as claimed in claim 10 or claim 11 wherein there are provided means for directing trimmed broccoli portions into a collection container and means for directing cut stalks and/or core into a disposal area.

13. A cauliflower trimming apparatus for the removal of the core from a cauliflower head, the apparatus comprising a first substantially one dimensionally curved blade having one dimensionally curved cutting edge, said edge being fixedly mounted to a base portion of the apparatus and a second substantially one dimensionally curved blade having a substantially one dimensionally curved cutting edge rotatable about an axis so as to define a generally hemispherical cutting envelope and with respect to said engagement edge between a first position with the cutting blades substantially angularly spaced apart for receiving the core of cauliflower to be trimmed and a second cutting position with said cutting edge of said second blade overlapping the generally upwardly facing edge of the first blade, said second rotatable blade being provided with a lever means having at an end remote from the blade end thereof a user engagable handle portion, said lever means being formed and arranged for driving said second rotatable curved blade from said first position to said second position substantially adjacent said first curved blade with said cutting edge thereof having a generally downwardly facing orientation, whereby in use, the core of the cauliflower item to be trimmed is placed upon said first and second curved blades in said angularly spaced apart position and said cauliflower pressed down on said cutting blades so that said blades penetrate into the core of the cauliflower to be trimmed and said second blade moved with respect to said first fixed blade, the path of travel of said cutting edge of said second blade defining said generally hemispherical cutting envelope through said core and thereby to separate cauliflower florets from the core of a cauliflower being trimmed.

14. A mobile harvester including one of a calabrese trimming apparatus according to claim 1; a vegetable trimming apparatus according to claim 5; a broccoli trimming apparatus according to claim 10; or a cauliflower trimming apparatus according to claim 13, which harvester is provided with a first chute means for directing edible cut portions through a grading grid and a second chute means for directing cores and/or stalks into a waste containing area.

15. A harvester as claimed in claim 14 in the form of a frame assembly formed and arranged for connection to a tractor and which is provided with a user/operator locating position.

16. A method for the removal of the stalk and/or core from a vegetable item, which method comprises the steps of providing a calabrese trimming apparatus according to claim 1; a vegetable trimming apparatus according to claim 5; a broccoli trimming apparatus according to claim 10; or a cauliflower trimming apparatus according to claim 13, placing the stalk and/or core of the vegetable item to be trimmed between the first and second curved blades of said apparatus; driving said second rotatable curved blade from said first position to said second position, the path of travel of said cutting edge of said second blade defining a generally part spherical cutting envelope through said stalk and/or core, whereby the stalk and/or core is cut and separated from the edible portions of the vegetable item.

17. A method as claimed in claim 16 for coring of a cauliflower which includes the step, prior to driving said second rotatable blade from said first position to said second position of applying downward pressure on the cauliflower against the generally upwardly facing curved blades so that said blades penetrate into the body of the cauliflower around the core thereof so as to separate florets of the cauliflower growing outwardly from the side of the stem of the core of the cauliflower.

18. A method as claimed in claim 17 which includes a further step of inducing a twisting action to the cauliflower in addition to applying downward pressure so as to facilitate cutting of said florets which grow outwardly of the stem of the core of a cauliflower.
